# EUROPÄISCHE PATENTSCHRIFT

(11) **EP 2 861 944 B1**
(45) Veröffentlichungstag und Bekanntmachung des Hinweises auf die Patenterteilung: **20.01.2021**
(21) Anmeldenummer: 13725964.4
(22) Anmeldetag: 29.05.2013
(51) Int. Cl.: G01F 23/00, G01N 27/22, G01F 23/284, G01F 23/296

(54) **FÜLLSTANDSMESSGERÄT UND VORRICHTUNG ZUR BESTIMMUNG DER DIELEKTRIZITÄTSZAHL**
LEVEL METER AND DEVICE FOR DETERMINING A DIELECTRIC CONSTANT
JAUGE DE NIVEAU ET DISPOSITIF POUR DÉTERMINER LA CONSTANTE DIÉLECTRIQUE

(30) Priorität: 18.06.2012 DE 102012105281
(43) Veröffentlichungstag der Anmeldung: 22.04.2015
(73) Patentinhaber: Endress+Hauser SE+Co. KG, 79689 Maulburg (DE)
(72) Erfinder: BLÖDT, Thomas, 79689 Maulburg (DE); KLÖFER, Peter, 79585 Steinen (DE)
(74) Vertreter: Andres, Angelika Maria
(86) Internationale Anmeldenummer: PCT/EP2013/061069
(87) Internationale Veröffentlichungsnummer: WO 2013/189707

(56) Entgegenhaltungen:
- EP-A2- 1 191 315
- WO-A1-00/43739
- WO-A2-2007/130896
- US-A1- 2001 050 629

## Beschreibung

Die vorliegende Erfindung betrifft ein Füllstandsmessgerät zur Bestimmung des Füllstandes eines Prozessmediums in einem Behälter mittels eines Laufzeitverfahrens. Das Prozessmedium ist beispielsweise eine Flüssigkeit. Weiterhin betrifft die Erfindung eine Vorrichtung zur Bestimmung der Dielektrizitätszahl eines Mediums in einem Behälter, mit einem Wellenleiter für ein hochfrequentes Messsignal und mit einer Elektronikeinheit. Bei dem Medium handelt es sich beispielsweise um eine Flüssigkeit, ein Gas oder um Schaum.

Zur Füllstandsmessung von Fluiden oder Schüttgütern in Behältern kommen Messgeräte zum Einsatz, welche den Füllstand mit einem Laufzeitverfahren bestimmen. Beispielsweise sind dies Radarmessgeräte. Derartige Messgeräte verwenden ein Mikrowellensignal, welches beispielsweise über eine Hornantenne in Richtung des zu detektierenden Mediums abgestrahlt wird. Das an dem Medium reflektierte Signal wird von einer Elektronikeinheit in dem Messgerät ausgewertet. Aus der Laufzeit des Signals ist der Abstand zu dem Medium und hieraus der Füllstand des Mediums bestimmbar. Es sind Pulsradarsysteme und kontinuierlich strahlende Radarsysteme bekannt. Bei so genannten TDR-Sonden wird das Signal entlang einer in das Medium hineinragenden Signalleitung geführt. Ein weiteres Messgerät, welches nach dem Laufzeitprinzip arbeitet, ist ein Ultraschallmessgerät, welches die Distanz zu dem Medium mittels eines Ultraschallsignals ermittelt.

Bei der Füllstandsmessung mittels eines Laufzeitverfahrens kann es zu Messungenauigkeiten kommen, wenn oberhalb des Prozessmediums, dessen Füllstand zu detektieren ist, an Stelle von Luft, Vakuum oder einem anderen Medium sehr niedriger relativer Dielektrizitätskonstante ein anderes Medium, beispielsweise eine Gasphase, vorhanden ist, da sich dies auf die Laufzeit des Signals auswirkt. Es wäre daher vorteilhaft, das Medium zu kennen, welches sich zwischen dem Messgerät und dem zu detektierenden Prozessmedium befindet. Zumindest die Dielektrizitätszahl des Mediums sollte bekannt sein.

Aus der Offenlegungsschrift DE 102006045711 A1 ist ein Verfahren zur Unterscheidung unterschiedlicher Füllmaterialien mittels Mikrowellenmessung bekannt. Hierzu werden Mikrowellen in Richtung des zu untersuchenden Mediums abgestrahlt und vom räumlich entfernten Sensor ausgewertet.

Aus der Veröffentlichungsschrift US 2001/0050629 A1 ist ein TDR-basiertes Füllstandsmessgerät mit einer Mess-Sonde bekannt, bei dem die Abtastrate automatisch in Abhängigkeit des Dielektrizitätswertes des Gases oberhalb des eigentlichen Prozessmediums im Behälter angepasst wird.

Die europäische Veröffentlichungsschrift EP 1191 315 A2 offenbart ein TDR-basiertes Füllstandsmessgerät, das den Füllstandswert des Prozessmediums und einer etwaigen Trennschicht unter Berücksichtigung des Dielektrizitätswertes des Prozessmediums ermittelt. Dabei wird der der Dielektrizitätswert auf Basis der reflektierten Signal-Amplitude bestimmt.

Die internationale Publikation WO 0043739 A1 beschreibt ein TDR-basiertes low-power-Füllstandsmessgerät, das Dank Ermittlung des Dielektrizitätswertes des Prozessmediums auch eingesetzt werden kann, wenn sich oberhalb des Prozessmediums eine Trennschicht befindet.

Die Aufgabe der Erfindung besteht darin, die Genauigkeit eines den Füllstand mittels eines Laufzeitverfahrens bestimmenden Füllstandsmessgerätes zu erhöhen. Weiterhin ist es eine Aufgabe der Erfindung, eine kompakte Vorrichtung zur Bestimmung der Dielektrizitätszahl eines Mediums bereit zu stellen.

Die Aufgabe wird von einem Füllstandsmessgerät zur Bestimmung des Füllstandes eines Prozessmediums in einem Behälter mittels eines Laufzeitverfahrens dadurch gelöst, dass das Füllstandsmessgerät Mittel zur Bestimmung der Dielektrizitätszahl eines zweiten Mediums, welches sich zwischen dem Füllstandsmessgerät und dem Prozessmedium befindet, aufweist, wobei die Mittel zur Bestimmung der Dielektrizitätszahl zumindest einen Wellenleiter für ein hochfrequentes Messsignal umfassen, welcher zumindest abschnittsweise mit einem Dielektrikum gefüllt und derart ausgestaltet und anordenbar ist, dass das Dielektrikum mit dem zweiten Medium eine Grenzfläche ausbildet, an welcher ein wesentlicher Anteil des dem zweiten Medium über den Wellenleiter zugeführten Messsignals reflektiert wird. Bei dem Wellenleiter handelt es sich beispielsweise um einen Hohlleiter oder eine Koaxialsonde.

In einer ersten Ausgestaltung des Füllstandsmessgerätes ist eine Elektronikeinheit vorgesehen, welche dazu ausgestaltet ist, an Hand der Laufzeit eines in Richtung des Prozessmediums ausgesendeten und an dem Prozessmedium reflektierten Signals einen Messwert für den Füllstand zu bestimmen, und in Abhängigkeit der gemessenen Dielektrizitätszahl des zweiten Mediums einen korrigierten Messwert für den Füllstand zu ermitteln. Eine Korrektur ist erforderlich, wenn das Medium von Luft verschieden ist, da die Laufzeit des Füllstandsmesssignals von der Dielektrizitätszahl des durchlaufenen Mediums bzw. der durchlaufenen Medien abhängt. Ein Anwendungsbeispiel sind Gasphasen, welche sich bei hohen Prozesstemperaturen ausbilden, oder staubhaltige Atmosphären. Die veränderte Dielektrizitätszahl ist durch die zusätzlichen Mittel zur Dielektrizitätszahlbestimmung zuverlässig erkennbar, sodass die passende Korrektur des Füllstandsmesswertes ermöglicht ist.

In einer Weiterbildung ist in der Elektronikeinheit mindestens ein Korrekturwert und/oder eine Korrekturformel zur Korrektur des Messwerts für den Füllstand in Abhängigkeit der Dielektrizitätszahl des zweiten Mediums hinterlegt, und die Elektronikeinheit ist dazu ausgestaltet, den Messwert für den Füllstand entsprechend dem Korrekturwert und/oder der Korrekturformel zu korrigieren.

Gemäß einer Ausgestaltung ist das Füllstandsmessgerät als Ultraschallmessgerät, Radarmessgerät mit geführtem Signal oder Radarmessgerät mit frei laufender Welle ausgeführt.

Mittels der Vorrichtung zur Bestimmung der Dielektrizitätszahl ist die Messgenauigkeit des Füllstandsmessgerätes erhöhbar, indem die Information über die Dielektrizitätszahl bei der Bestimmung des Füllstands berücksichtigt wird. Ein nach dem Laufzeitverfahren arbeitendes Füllstandsmessgerät ist dazu ausgestaltet, ein Signal in Richtung Prozessmedium auszusenden und das reflektierte Signal zu empfangen und auszuwerten. Das Füllstandsmessgerät ist von dem Prozessmedium beabstandet angeordnet. Allenfalls bei einem Radarmessgerät mit geführter Welle ist ein Kontakt über einen Wellenleiter vorhanden. Das Sende- und Empfangselement zum Aussenden des Signals und Empfangen des reflektierten Signals ist jedoch dennoch in einer bestimmten Distanz von dem Prozessmedium angeordnet. Im Gegensatz hierzu besteht zwischen dem Medium, dessen Dielektrizitätszahl zu bestimmen ist, und dem Wellenleiter für das hochfrequente Messsignal zur Bestimmung der Dielektrizitätszahl ein direkter Kontakt. Das hochfrequente Messsignal, vorzugsweise ein Mikrowellensignal, wird nicht in das Medium hineingestrahlt, sondern an der Grenzfläche zu dem Medium reflektiert. Der Wellenleiter und das Dielektrikum sind daher im Gegensatz zu den der Füllstandsmessung dienenden Komponenten des Füllstandsmessgerätes nicht dazu ausgestaltet, das Messsignal möglichst verlustarm in das Medium abzustrahlen, sondern vielmehr derart ausgestaltet, dass das Messsignal an der Grenzfläche reflektiert wird. Vorteilhafte Ausgestaltungen bewirken eine möglichst verlustarme Ausbreitung des Messsignals im Wellenleiter oder eine möglichst verlustarme Reflexion an der Grenzfläche.

Die Aufgabe wird weiterhin von einer Vorrichtung zur Bestimmung der Dielektrizitätszahl eines Mediums in einem Behälter, mit einem Wellenleiter für ein hochfrequentes Messsignal und mit einer Elektronikeinheit dadurch gelöst, dass der Wellenleiter zumindest abschnittsweise mit einem Dielektrikum gefüllt ist und derart ausgestaltet und in den Behälter einbringbar ist, dass das Dielektrikum mit dem Medium eine Grenzfläche ausbildet, an welcher ein wesentlicher Anteil des sich in dem Wellenleiter in Richtung des Mediums ausbreitenden Messsignals reflektiert wird und dass die Elektronikeinheit dazu ausgestaltet ist, das an der Grenzfläche reflektierte Signal zu empfangen und zumindest in Bezug auf die Amplitude auszuwerten.

Da die Reflektivität von der Dielektrizitätszahl des an die Grenzfläche angrenzenden Mediums abhängt ist die Amplitude des reflektierten Signals ein Maß für die Dielektrizitätszahl. Das Dielektrikum liegt vorzugsweise in Form eines Festkörpers vor und bildet so eine definierte Grenzfläche zu dem Medium aus. Die erfindungsgemäße Vorrichtung stellt ein nichtinvasives Mittel zur Bestimmung der Dielektrizitätszahl dar. Weiterhin ist die Vorrichtung kompakt, da ein Wellenleiter mit sehr geringen Abmessungen für die Messung ausreichend ist. Die Vorrichtung kann somit auch über einen Prozessanschluss mit geringem Durchmesser in den Behälter eingebracht werden.

Gemäß einer ersten Ausgestaltung vergleicht die Elektronikeinheit die Amplitude des Messsignals mit der Amplitude des reflektierten Signals und bestimmt aus dem Verhältnis der Amplituden die Dielektrizitätszahl des Mediums. Mit anderen Worten ist die Elektronikeinheit dazu ausgestaltet, die Dielektrizitätszahl aus dem Energieverhältnis aus einlaufender und auslaufender Welle zu ermitteln.

In einer Ausgestaltung weist das Dielektrikum einen kegelstumpfförmigen Abschluss auf. Vorzugsweise ist der kegelstumpfförmige Abschluss drehsymmetrisch. Durch eine derartige Formgebung wird der Anteil der transmittierten Leistung verringert.

In einer weiteren Ausgestaltung ist an der Vorrichtung mindestens eine Kühlrippe angeformt. Vorzugsweise verfügt der Wellenleiter an dessen dem Dielektrikum abgewandten Außenseite über eine oder mehrere Kühlrippen. Diese bewirken einen Schutz der Elektronikeinheit vor hohen Prozesstemperaturen.

In einer Ausgestaltung ist der Wellenleiter als Hohlleiter oder als Koaxialleiter ausgestaltet. Beispielsweise ist der Wellenleiter als Rundhohlleiter ausgestaltet.

Weiterhin wird die Aufgabe gelöst durch ein System zur Bestimmung eines Füllstands eines Prozessmediums in einem Behälter, mindestens umfassend ein Füllstandsmessgerät zur Bestimmung des Füllstandes des Prozessmediums mittels eines Laufzeitverfahrens und eine Vorrichtung zur Bestimmung der Dielektrizitätszahl eines zweiten Mediums, welches sich zwischen dem Prozessmedium und dem Füllstandsmessgerät befindet, wobei die Vorrichtung wie vorausgehend beschrieben ausgestaltet ist.

Die Erfindung wird anhand der nachfolgenden Figuren näher erläutert. Es zeigen jeweils in schematischer Darstellung:
- Fig. 1: einen Abschnitt einer Vorrichtung zur Bestimmung der Dielektrizitätszahl in einer ersten Ausgestaltung;
- Fig. 2: einen Abschnitt einer Vorrichtung zur Bestimmung der Dielektrizitätszahl in einer zweiten Ausgestaltung, mit Elektronikeinheit;
- Fig. 3: ein System aus einem Messgerät zur Füllstandsmessung und einer Vorrichtung zur Bestimmung der Dielektrizitätszahl.

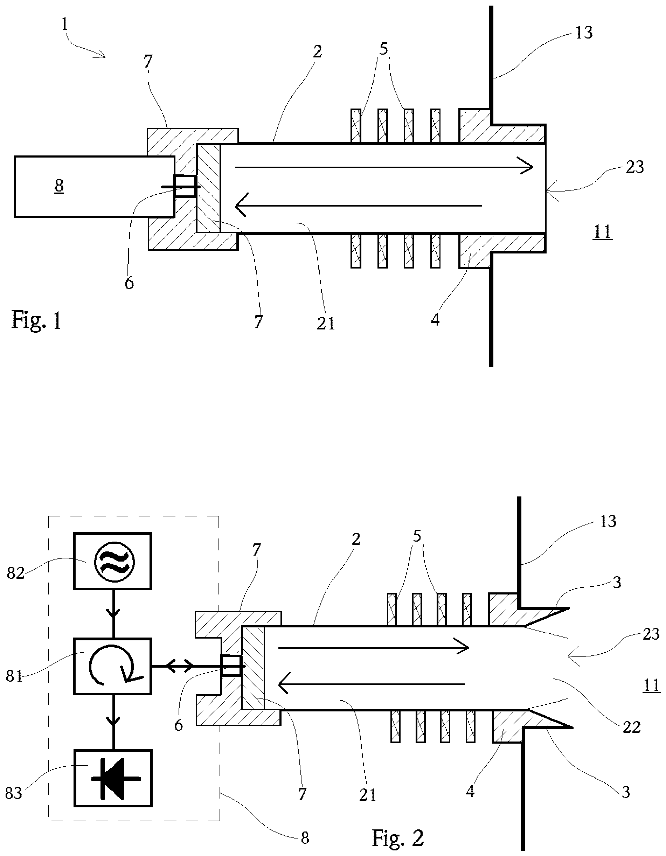

In Fig. 1 ist eine Vorrichtung 1 zur Bestimmung der Dielektrizitätszahl eines in einem Behälter 12 befindlichen Mediums 11 dargestellt. Die Vorrichtung 1 ist in die Wandung 13 des Behälters 12 eingebracht. Hierzu weist die Vorrichtung 1 einen Prozessanschluss 4 auf, beispielsweise einen Flansch oder ein Gewinde. Bei dem Medium 11 handelt es sich vorzugsweise um eine Gasphase, Dampf oder eine staubige Atmosphäre, d.h. ein partikelhaltiges Gas.

Wesentlicher Bestandteil der Vorrichtung ist ein Wellenleiter 2 für ein hochfrequentes Messsignal. Unter einem hochfrequenten Signal ist ein Signal im Mikrowellenbereich, insbesondere im GHz-Bereich zu verstehen, beispielsweise mit einer Frequenz zwischen 6 GHz und 77 GHz, insbesondere auch 26GHz. Der Wellenleiter 2 ist als Hohlleiter ausgestaltet, beispielsweise mit runder oder rechteckiger Querschnittsfläche, und ist mit einem Dielektrikum 21 in Form eines Feststoffes gefüllt. Besonders geeignet ist ein Dielektrikum 21, welches die sich im Wellenleiter 2 ausbreitenden hochfrequenten Wellen nur geringfügig dämpft, beispielsweise PTFE, ETFE, PEEK oder PE. Die Vorrichtung 1 bzw. der Wellenleiter 2 sind derart angeordnet, dass der Wellenleiter 2mit dem in dem Behälter befindlichen Medium 11 über eine Grenzfläche 23 in Kontakt steht. Das Dielektrikum 21 kann in den Behälter hineinragen, zumindest im Wesentlichen bündig mit der Behälterwandung 13 abschließen oder zurückversetzt sein.

An Stelle des Hohlleiters kann auch eine Koaxialsonde als Wellenleiter dienen. Vorzugsweise ist der Innenleiter der Koaxialsonde gegenüber der Grenzfläche 23 um mindestens einige Millimeter zurückgezogen, sodass der Aufbau explosionssicher ausgestaltet ist. Die Abmessungen des Wellenleiters 2 können gering ausfallen, sodass die Vorrichtung 1 bei einer Einbringung in die Wandung 13 nur wenig Platz beansprucht. Die Abmessungen richten sich hierbei nach der verwendeten Frequenz des Messsignals, wobei sich die Abmessungen antiproportional zu der Frequenz verhalten. Beispielsweise beträgt der Durchmesser des Wellenleiters 2 bei einer Frequenz von 6 GHz vorzugsweise ca. 40 mm, während der Durchmesser bei 26 GHz vorzugsweise zwischen 5 mm und 12 mm liegt. Die Länge bei 26 GHz beträgt beispielsweise zwischen 15 mm und 40 mm. Prinzipiell kann die Länge aber nahezu beliebig gewählt werden, wobei eine geringere Länge zu geringeren Leistungsverlusten führt.

Das Dielektrikum 21 bildet eine definierte Grenzfläche 23 zu dem Medium 11, dessen Dielektrizitätszahl zu bestimmen ist, aus. An der Grenzfläche 23 besteht ein direkter Kontakt zwischen Dielektrikum 21 und Medium 11. In einer Ausgestaltung ist die mediumsberührende Oberfläche des Dielektrikums 21 mit einer Prozesstrennschicht, beispielsweise in Form einer dünnen Beschichtung, versehen. Die Grenzfläche 23 kann eben sein oder eine andere geeignete Form annehmen, sodass ein möglichst großer Anteil des Messsignals reflektiert und ein möglichst geringer Teil in das Medium 11 transmittiert wird. Je geringer die Transmission ist, desto genauer ist die Bestimmung der Dielektrizitätszahl möglich, da weniger unerwünschte Reflexionen innerhalb des Behälters 12 auftreten, welche in den Wellenleiter 2 rückgekoppelt werden können.

An dem Wellenleiter 2 sind mehrere Kühlrippen 5 angeformt. Diese dienen der thermischen Entkopplung der Vorrichtung 1, insbesondere der Elektronikeinheit 8, welche sich an den Wellenleiter 2 anschließt, von dem Prozess. Alternativ oder zusätzlich ist eine thermische Entkopplung über eine entsprechend große Länge des Wellenleiters 2 möglich.

Das Messsignal wird in der Elektronikeinheit 8 erzeugt und über eine Durchführung 6 einem Kopplungselement 7 zugeführt, welches das Messsignal in den Wellenleiter 2 eingekoppelt. Über dieselben Elemente empfängt die Elektronikeinheit 8 das reflektierte Messsignal. Auf die Elektronikeinheit 8, welche hier nur schematisch dargestellt ist, wird in Fig. 2 näher eingegangen.

Fig. 2 offenbarteine vorteilhafte Ausgestaltung des mit dem Dielektrikum 21 gefüllten Wellenleiters 2. Der Wellenleiter 2 kann wieder als Hohlleiter oder Koaxialsonde aufgebaut sein und ist nicht auf eine kreisförmige Querschnittsfläche beschränkt. Das Dielektrikum 21 ist derart ausgestaltet, dass der transmittierte Anteil des Messsignals verringert wird. Hierzu verfügt das Dielektrikum 21 über einen kegelstumpfförmigen Abschluss 22. Die Mantelfläche des Abschlusses 22 bildet hierbei die Grenzfläche 23 zu dem Medium 11. Vorzugsweise ist der Abschluss 22 drehsymmetrisch. Weiterhin ist der Abschluss 22 von einem Trichter 3 umgeben, welcher vorzugsweise ebenfalls drehsymmetrisch ist. Der Trichter 3 ist aus einem metallischen Werkstoff gefertigt. Der Abschluss 22 und der Trichter 3 ragen in das Innere des durch die Wandung 13 begrenzten Behälters 12 hinein.

In einer Variante dieser Ausgestaltung ragt das Dielektrikum 21 weiter in den Behälter 12 hinein, sodass sich nicht nur der kegelstumpfförmige Abschluss 22 innerhalb des Behälters 12 befindet. In einer anderen Variante ist der Abschluss 22 zurückversetzt, sodass der Abschluss 22 nur teilweise in den Behälter 12 hineinragt. Weiterhin ist eine Variante möglich, bei welcher die Grenzfläche 23 des Dielektrikums 21 im Wesentlichen bündig mit der Behälterwandung 13 abschließt, d.h. der Wellenleiter 2 und Dielektrikum 21 nicht in das Behälterinnere hineinragen. Auch der Trichter 3 befindet sich in dieser Variante außerhalb des Behälters 12. Vorzugsweise bildet der Trichter 3 bei dieser Variante gleichzeitig den Prozessanschluss 4 zur Befestigung der Vorrichtung 1 in der Wandung 13.

Die weiteren Ausführungen gelten allgemein für eine erfindungsgemäße Vorrichtung 1 zur Bestimmung der Dielektrizitätszahl und sind nicht auf die dargestellte Ausgestaltung des Wellenleiters 2 und des Dielektrikums 21 beschränkt.

Der dem Medium 11 abgewandte Endbereich des Wellenleiters 2 ist über Anschlussmittel mit der Elektronikeinheit 8 verbunden. Die Anschlussmittel umfassen zumindest ein Kopplungselement 7 und eine Durchführung 6. Das Kopplungselement 7 koppelt das Messsignal in den Wellenleiter 2 ein und das reflektierte Messsignal aus dem Wellenleiter 2 aus. Aus Explosionsschutzgründen ist eine gasdichte und hochfrequenzdurchlässige Durchführung 6 vorhanden, durch welche das Messsignal von der Elektronikeinheit 8 in das Kopplungselement 7 und das reflektierte Messsignal von dem Kopplungselement 7 in die Elektronikeinheit 8 gelangt. Die Durchführung 6 ist beispielsweise als Glasdurchführung ausgestaltet, wobei ein Kabel als Träger für das Messsignal dienen kann. Der Übergang zur Hohlleitertechnik wird durch das Kopplungselement 7 hergestellt.

Die Elektronikeinheit 8 weist einen Hochfrequenzoszillator 82 oder alternativ eine andere Hochfrequenzquelle auf, welche das hochfrequente Messsignal erzeugt. Das Messsignal ist einem so genannten Duplexer 81 zugeführt. Der Duplexer 81 dient als Sende-/Empfangsweiche. Der Duplexer 81 leitet das Messsignal an den Wellenleiter 2 bzw. die Durchführung 6 weiter und führt das reflektierte Messsignal einem Detektor 83 zu. Der Duplexer 81 ist beispielsweise als Zirkulator oder als Kombination aus einem Koppler und einem angepassten Anschluss ausgestaltet, wobei letztere Ausgestaltung auch in Hohlleitertechnik möglich ist. Eine weitere Ausgestaltungsform in Hohlleitertechnik ist ein so genanntes magisches T. Ein solches ist direkt hinter dem Wellenleiter 2 anordenbar, sodass das Koppelelement 7 und die Durchführung 6 entfallen können.

Der Detektor 83 ist dazu ausgestaltet, die Amplitude des ihm zugeführten Signals zu bestimmen. Vorzugsweise vergleicht der Detektor 83 die gemessene Amplitude des reflektierten Messsignals mit der Amplitude des ausgesendeten Messsignals und ermittelt hieraus den Anteil des an der Grenzfläche 23 zu dem Medium 11 reflektierten Messsignals. Die reflektierte Leistung ist in bekannter Weise von den Dielektrizitätszahlen des Dielektrikums 21 und des Mediums 11 abhängig. Da erstere bekannt ist, ist aus dem reflektierten Messsignal die Dielektrizitätszahl des Mediums 11 ermittelbar.

Der Detektor 83 kann in einer vorteilhaften Ausgestaltung beispielsweise mittels eines benachbart angeordneten Temperatursensors temperaturkompensiert werden oder auf einer vorgebbaren Temperatur betrieben werden, wodurch die Messgenauigkeit bei der Bestimmung der Dielektrizitätszahl erhöht ist.

Zum Schutz der Elektronikeinheit 8 vor hohen Prozesstemperaturen können die Sensorkomponenten, d.h. der Wellenleiter 2, das Dielektrikum 21, ggf. der Trichter 3 und der Prozessanschluss 4, von dem Duplexer 81 abgesetzt sein. Die Verbindung zwischen den Sensorkomponenten und dem Duplexer 81 erfolgt beispielsweise über ein Kabel. Mit zunehmender Länge des Kabels verringert sich jedoch die Messgenauigkeit.

Das Messsignal ist kontinuierlich oder pulsartig erzeugbar. Beispielsweise handelt es sich um ein sinusförmiges oder ein rechteckförmiges Signal.

Nicht dargestellt ist eine Auswerteeinheit, welche aus dem gemessenen Amplitudenverhältnis die Dielektrizitätskonstante bestimmt. Die Auswerteeinheit ist vorzugsweise digital ausgestaltet, beispielsweise als Mikrocontroller. Vorzugsweise ist in einem Speicher der Auswerteeinheit ein Zusammenhang zwischen Amplitudenverhältnis und Dielektrizitätszahl in Form einer Tabelle oder einer Formel hinterlegt.

In einer nicht dargestellten weiteren Ausgestaltung wird an Stelle des absoluten Reflexionsfaktors ein relativer Reflexionsfaktor bestimmt. Hierzu verfügt die Vorrichtung 1 über ein Referenzelement, welches gleich dem Wellenleiter 2 mit dem Dielektrikum 21 ausgestaltet ist, jedoch an Stelle der Grenzfläche zum Medium 11 eine Grenzfläche zu einem Referenzmedium mit bekannter Dielektrizitätszahl, beispielsweise einem Referenzgas, aufweist. Die Auswerteeinheit vergleicht die Amplitude des reflektierten Messsignals mit der Amplitude des reflektierten Referenzsignals und bestimmt an Hand des Verhältnisses die Dielektrizitätszahl des Mediums 11.

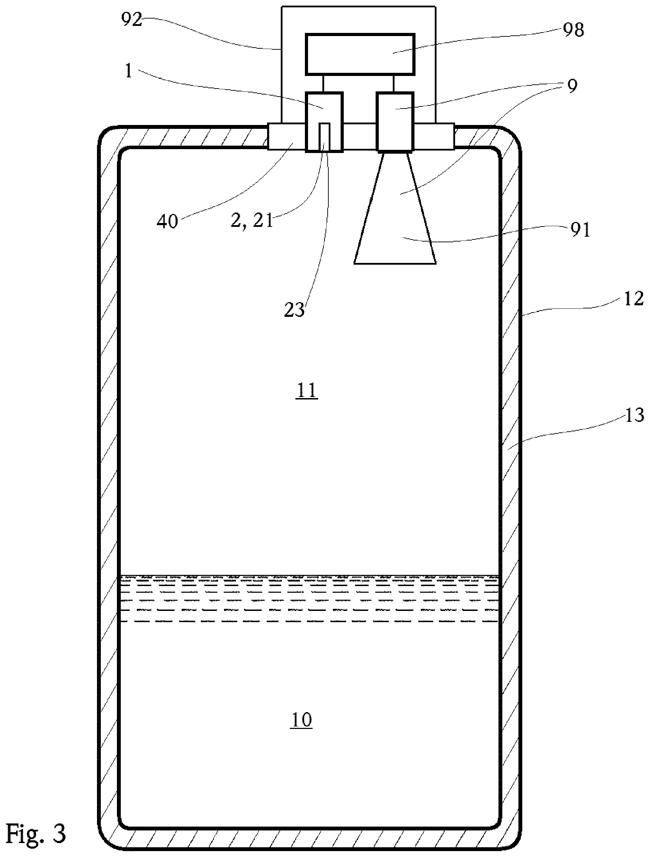

In Fig. 3 ist ein System aus einem Füllstandsmessgerät 9 und einer Vorrichtung 1 zur Bestimmung der Dielektrizitätszahl dargestellt. Das Füllstandsmessgerät 9 und die Vorrichtung 1 zur Bestimmung der Dielektrizitätszahl sind vorzugsweise benachbart zueinander an oder in einem gemeinsamen Behälter 12 angeordnet. Bei dem Füllstandsmessgerät 9 handelt es sich um ein Messgerät, welches mittels eines Laufzeitverfahrens den Füllstand des Prozessmediums 10 bestimmt. Das Füllstandsmessgerät 9 sendet über eine Antenne 91 ein Signal in Richtung des Prozessmediums 10 aus und empfängt das an der Oberfläche des Prozessmediums 10 reflektierte Signal. Aus der Signallaufzeit ermittelt das Füllstandsmessgerät 9 die Distanz zu dem Prozessmedium 10, woraus bei bekannter Behältergeometrie der Füllstand bestimmbar ist. Die Genauigkeit bei der Bestimmung des Füllstands wird mit Hilfe der Vorrichtung 1 zur Bestimmung der Dielektrizitätszahl des oberhalb des Prozessmediums 10 befindlichen Mediums 11 erhöht.

Das Füllstandsmessgerät 9 kann beispielsweise als Ultraschallmessgerät oder als Radarmessgerät ausgestaltet sein, wobei das Radarmessgerät nicht auf die dargestellte Variante mit einer Hornantenne 91 beschränkt ist.

Mittels der Vorrichtung 1 zur Bestimmung der Dielektrizitätszahl eines angrenzenden Mediums 11 ist detektierbar, ob zwischen dem Füllstandsmessgerät 9 und dem Prozessmedium 10 Luft oder ein anderes Medium vorhanden ist. Weiterhin ist das Medium 11 an Hand der Dielektrizitätszahl spezifizierbar. Insbesondere ist eine Gasphase 11 des Prozessmediums 10 erkennbar. Eine Gasphase 11 bildet sich häufig bei hohen Prozesstemperaturen aus. Durch Kenntnis der Dielektrizitätszahl des zwischen dem Füllstandsmessgerät 9 und dem Prozessmedium 10 vorliegenden Mediums 11 sind Änderungen in der Ausbreitungsgeschwindigkeit des Signals zur Füllstandsmessung gegenüber der Ausbreitung in Luft bei der Bestimmung des Füllstands berücksichtigbar. Dies ermöglicht eine besonders genaue und zuverlässige Bestimmung des Füllstands.

Das System kann auch mehrere Vorrichtungen 1 zur Bestimmung der Dielektrizitätszahl aufweisen, welche auf verschiedenen Höhen in dem Behälter 12 angeordnet sind. Beispielsweise ist hierdurch auch Schaum erkennbar, welcher sich auf der Oberfläche des Prozessmediums 10 befindet, jedoch nicht bis zum Behälterdeckel reicht, wo das Füllstandsmessgerät 9 üblicherweise montiert ist.

Das System umfasst weiterhin eine übergeordnete Elektronikeinheit 98. Die Elektronikeinheit 98 empfängt den Messwert für den Füllstand und den Messwert für die Dielektrizitätszahl und ist derart ausgestaltet, dass sie mittels des Messwerts für die Dielektrizitätszahl aus dem ihr zugeführten Füllstandswert einen kompensierten Füllstandswert berechnet. In einer anderen Variante ist die Information über die Dielektrizitätszahl des zwischen dem Füllstandsmessgerät 9 und dem Prozessmedium 10 befindlichen Mediums 11 dem Füllstandsmessgerät 9 zur Verfügung gestellt. Beispielsweise sind die Vorrichtung 1 und das Füllstandsmessgerät 9 über eine Datenleitung miteinander verbunden oder die Vorrichtung 1 überträgt ihre Messdaten drahtlos an das Füllstandsmessgerät 9.

In einer vorteilhaften Ausgestaltung des Systems sind wie dargestellt die Vorrichtung 1 zur Bestimmung der Dielektrizitätszahl und das Füllstandsmessgerät 9 in einen gemeinsamen Flansch 40 montiert. Die Elektronikeinheit 98 ist mit den beiden Messgeräten 1, 9 verbunden. Ein Gehäuse 92 schützt die Elektronikeinheit 98 vorder Umgebung. Die beiden Messgeräte 1, 9 brauchen in dieser Ausgestaltung nicht über ein eigenes Schutzgehäuse zu verfügen, da sich zumindest die elektronischen Komponenten innerhalb des Gehäuses 92 befinden.

Alternativ zu der Ausbildung eines Systems aus Füllstandsmessgerät 9 und Vorrichtung 1 zur Bestimmung der Dielektrizitätszahl eines angrenzenden Mediums 11 kann die Genauigkeit eines auf einem Laufzeitverfahren basierenden Füllstandsmessgerätes 9 auch verbessert werden, indem das Füllstandsmessgerät 9 selbst derart ausgestaltet wird, dass es über Mittel zur Bestimmung der Dielektrizitätszahl verfügt. Hierbei kann die Vorrichtung 1 in das Füllstandsmessgerät 9 integriert sein, beispielsweise indem eine eigenständige Vorrichtung 1 zur Bestimmung der Dielektrizitätszahl in das Gehäuse des Füllstandsmessgerätes 9 eingebracht ist und der Elektronikeinheit des Füllstandsmessgerätes 9 den Messwert für die Dielektrizitätszahl zur Verfügung stellt.

In einer anderen Variante ist lediglich der Detektor zur Detektion des reflektierten Messsignals zusätzlich in das Gehäuse des Füllstandsmessgerätes 9 eingebracht. Eine gemeinsame Signalerzeugungseinheit erzeugt das Messsignal für die Ermittlung der Dielektrizitätszahl und das Signal für die Füllstandsmessung, leitet es in einen gemeinsamen mit einem Dielektrikum 21 gefüllten Hohlleiter 2 und eine gemeinsame Elektronikeinheit 98 wertet die Signale für den Füllstand und die Messsignale für die Dielektrizitätszahl aus und bestimmt unter Berücksichtigung der Dielektrizitätszahl des Mediums 11 den Füllstand des Prozessmediums 10. Diese Ausgestaltung ist möglich, wenn das Füllstandsmessgerät 9 bereits über einen geeigneten Wellenleiter 2 verfügt, welcher mit einem Dielektrikum 21 gefüllt ist, und gleiche Signale für die Füllstandsmessung und Dielektrizitätszahlmessung verwendet werden können. Eine derartige Ausgestaltung ist besonders vorteilhaft, da die Genauigkeit der Füllstandsmessung mit nur wenigen zusätzlichen Bauteilen erhöht werden kann.

In einer anderen Ausgestaltung ist für die Messung der Dielektrizitätszahl des angrenzenden Mediums 11 ein separater Wellenleiter 2 in das Füllstandsmessgerät 9 eingebracht. In einer Ausgestaltung verfügt das Füllstandsmessgerät 9 weiterhin über zwei separate Signalerzeugungseinheiten für das Signal zur Füllstandsmessung und das Messsignal zur Dielektrizitätszahlbestimmung. In Abhängigkeit der Ausgestaltung des Füllstandsmessgeräts 9, insbesondere in Bezug auf dessen Anfälligkeit gegenüber Störsignalen, kann das Messsignal mit der gleichen Frequenz wie das Signal zur Füllstandsmessung erzeugt werden. Ist eine Messung mit gleichen Frequenzen nicht möglich, können die beiden Signale mit verschiedenen, auch mit nur leicht, beispielsweise um 5% voneinander abweichenden Frequenzen erzeugt werden. Die Messung des Füllstands und die Messung der Dielektrizitätszahl kann zeitgleich oder abwechselnd erfolgen.

### Bezugszeichenliste

- 1: Vorrichtung zur Bestimmung der Dielektrizitätszahl
- 2: Wellenleiter
- 21: Dielektrikum
- 22: Abschluss
- 23: Grenzfläche
- 3: Trichter
- 4: Prozessanschluss
- 40: Flansch
- 5: Kühlrippen
- 6: Glasdurchführung
- 7: Kopplungselement
- 8: Elektronikeinheit
- 81: Duplexer
- 82: Hochfrequenzoszillator
- 83: Detektor
- 9: Füllstandsmessgerät
- 91: Antenne
- 92: Gehäuse
- 98: Elektronikeinheit
- 10: Prozessmedium
- 11: Zweites Medium/Gasphase
- 12: Behälter
- 13: Behälterwandung

## Patentansprüche

1. Füllstandsmessgerät (9) zur Bestimmung des Füllstandes eines Prozessmediums (10) in einem Behälter (12) mittels eines Laufzeitverfahrens,
**dadurch gekennzeichnet,**
**dass** das Füllstandsmessgerät (9) Mittel zur Bestimmung der Dielektrizitätszahl eines zweiten Mediums (11), welches sich zwischen dem Füllstandsmessgerät (9) und dem Prozessmedium (10) befindet, aufweist,
wobei die Mittel zur Bestimmung der Dielektrizitätszahl zumindest einen Wellenleiter (2) für ein hochfrequentes Messsignal umfassen, welcher zumindest abschnittsweise mit einem Dielektrikum (21) gefüllt und derart ausgestaltet und anordenbar ist, dass das Dielektrikum (21) mit dem zweiten Medium (11) eine Grenzfläche (23) ausbildet, an welcher ein Anteil des dem zweiten Medium (11) über den Wellenleiter (2) zugeführten Messsignals reflektiert wird.

2. Füllstandsmessgerät nach Anspruch 1,
**dadurch gekennzeichnet,**
**dass** mindestens eine Elektronikeinheit (98) vorgesehen ist, welche dazu ausgestaltet ist, an Hand eines in Richtung des Prozessmediums (10) ausgesendeten und an dem Prozessmedium reflektierten Signals einen Messwert für den Füllstand zu bestimmen, und in Abhängigkeit der gemessenen Dielektrizitätszahl des zweiten Mediums (11) einen korrigierten Messwert für den Füllstand zu ermitteln.

3. Füllstandsmessgerät nach dem vorangehenden Anspruch,
**dadurch gekennzeichnet,**
**dass** in der Elektronikeinheit (98) mindestens ein Korrekturwert und/oder eine Korrekturformel zur Korrektur des Messwerts für den Füllstand in Abhängigkeit der Dielektrizitätszahl des zweiten Mediums (11) hinterlegt ist,
und **dass** die Elektronikeinheit (98) dazu ausgestaltet ist, den Messwert für den Füllstand entsprechend dem Korrekturwert und/oder der Korrekturformel zu korrigieren.

4. Füllstandsmessgerät nach mindestens einem der Ansprüche1-3,
**dadurch gekennzeichnet,**
**dass** das Füllstandsmessgerät (9) als Ultraschallmessgerät, Radarmessgerät mit geführtem Signal oder Radarmessgerät mit frei laufender Welle ausgeführt ist.

5. System, mindestens umfassend ein Füllstandsmessgerät (9) zur Bestimmung des Füllstandes eines Prozessmediums (10) in einem Behälter (12) mittels eines Laufzeitverfahrens, und mindestens eine Vorrichtung (1) zur Bestimmung der Dielektrizitätszahl eines zweiten Mediums (11), welches sich zwischen dem Prozessmedium (10) und dem Füllstandsmessgerät (9) befindet,
wobei die Vorrichtung (1) einen Wellenleiter (2) für ein hochfrequentes Messsignal und mit einer Elektronikeinheit (8) umfasst,
**dadurch gekennzeichnet,**
**dass** der Wellenleiter (2) zumindest abschnittsweise mit einem Dielektrikum (21) gefüllt ist und derart ausgestaltet und in den Behälter (12) einbringbar ist, dass das Dielektrikum (21) mit dem Medium (11) eine Grenzfläche (23) ausbildet, an welcher ein Anteil des sich in dem Wellenleiter in Richtung des Mediums (11) ausbreitenden Messsignals reflektiert wird
und
**dass** die Elektronikeinheit (8) dazu ausgestaltet ist, das an der Grenzfläche (23) reflektierte Signal zu empfangen und in Bezug auf die Amplitude auszuwerten.

6. Systemnach Anspruch 5,
**dadurch gekennzeichnet,**
**dass** die Elektronikeinheit (8) die Amplitude des Messsignals mit der Amplitude des reflektierten Signals vergleicht und aus dem Verhältnis der Amplituden die Dielektrizitätszahl des Mediums (11) bestimmt.

7. System nach Anspruch 5 oder 6,
**dadurch gekennzeichnet,**
**dass** das Dielektrikum (21) einen kegelstumpfförmigen Abschluss (22) aufweist.

8. Systemnach einem oder mehreren der Ansprüche 5-7,
**dadurch gekennzeichnet,**
**dass** an der Vorrichtung (1) mindestens eine Kühlrippe (5) angeformt ist.

9. System nach einem oder mehreren der Ansprüche 5-8,
**dadurch gekennzeichnet,**
**dass** der Wellenleiter (2) als Hohlleiter oder als Koaxialleiter ausgestaltet ist.

## Claims

1. Level measuring device (9) for determining the level of a process medium (10) in a vessel (12) using a time-of-flight method,
**characterized**
**in that** the level measuring device (9) has a means to determine the dielectric coefficient of a second medium (11), which is located between the level measuring device (9) and the process medium (10),
wherein said means for determining the dielectric coefficient comprises at least a waveguide (2) for a high-frequency measuring signal, wherein said guide is at least partially filled with a dielectric (21) and is designed and can be arranged in such a way that the dielectric (21) forms an interface (23) with the second medium (11) at the level of said interface a part of the measuring signal - which is directed to the second medium (11) via the waveguide (2) - is reflected.

2. Level measuring device as claimed in Claim 1,
**characterized**
**in that** at least an electronic unit (98) is provided which is designed to determine a measured value for the level using a signal emitted in the direction of the process medium (10) and reflected at the surface of the process medium, and to determine, depending on the measured dielectric coefficient of the second medium (11), a corrected measured value for the level.

3. Level measuring device as claimed in the previous claim,
**characterized**
**in that** at least a correction value and/or a correction formula for correcting the measured value for the level, depending on the dielectric coefficient of the second medium (11), is saved in the electronic unit (98), and in that the electronic unit (98) is designed to correct the measured value for the level according to the correction value and/or the correction formula.

4. Level measuring device as claimed in at least one of the Claims 1 to 3,
**characterized**
**in that** the level measuring device (9) is designed as an ultrasonic measuring device, a radar measuring device with a guided signal or a radar measuring device with a free wave.

5. System, comprising at least a level measuring device (9) for determining the level of a process medium (10) in a vessel (12) by means of a time-of-flight method, and at least an apparatus (1) designed to determine the dielectric coefficient of a second medium (11), which is located between the process medium (10) and the level measuring device (9),
wherein the apparatus (1) comprises a waveguide (2) for a high-frequency measuring signal, and with an electronic unit (8),
**characterized**
**in that** the waveguide (2) is at least partially filled with a dielectric (21) and is designed and can be inserted into the vessel (12) in such a way that the dielectric (21) forms an interface (23) with the medium (11), at the level of said interface a part of the measuring signal - which propagates in the direction of the medium (11) in the waveguide - is reflected
and
**in that** the electronic unit (8) is designed in such a way to receive the signal reflected at the interface (23) and to interpret it in relation to the amplitude.

6. System as claimed in Claim 5,
**characterized**
**in that** the electronic unit (8) compares the amplitude of the measuring signal with the amplitude of the reflected signal and determines the dielectric coefficient of the medium (11) from the ratio of the amplitudes.

7. System as claimed in Claim 5 or 6,
**characterized**
**in that** the dielectric (21) has an end (22) in the shape of a truncated cone.

8. System as claimed in one or more of the Claims 5 to 7,
**characterized**
**in that** at least one cooling fin (5) is provided on the apparatus (1).

9. System as claimed in one or more of the Claims 5 to 8,
**characterized**
**in that** the waveguide (2) is designed as a hollow waveguide or a coaxial guide.

## Revendications

1. Transmetteur de niveau (9) destiné à la détermination du niveau d'un produit de process (10) dans un réservoir (12) au moyen d'une méthode du temps de parcours,
**caractérisé**
**en ce que** le transmetteur de niveau (9) comprend des moyens pour la détermination du coefficient diélectrique d'un deuxième produit (11), lequel se trouve entre le transmetteur de niveau (9) et le produit de process (10),
les moyens pour la détermination du coefficient diélectrique comprenant au moins un guide d'ondes (2) pour un signal de mesure de haute fréquence, lequel guide est rempli au moins partiellement d'un diélectrique (21) et est conçu et peut être disposé de telle sorte que le diélectrique (21) forme avec le deuxième produit (11) une interface, au niveau de laquelle une part du signal de mesure - acheminé au deuxième produit (11) par l'intermédiaire du guide d'ondes (2) - est réfléchie.

2. Transmetteur de niveau selon la revendication 1,
**caractérisé**
**en ce qu'**est prévue au moins une unité électronique (98), laquelle est conçue pour déterminer une valeur mesurée pour le niveau à partir d'un signal émis en direction du produit de process (10) et réfléchi à la surface du produit de process, et à déterminer, en fonction du coefficient diélectrique mesuré du deuxième produit (11), une valeur mesurée corrigée pour le niveau.

3. Transmetteur de niveau selon la revendication précédente,
**caractérisé**
**en ce qu'**est enregistrée, dans l'unité électronique (98), au moins une valeur de correction et/ou une formule de correction destinée à la correction de la valeur mesurée pour le niveau en fonction du coefficient diélectrique du deuxième produit (11),
et **en ce que** l'unité électronique (98) est conçue de telle sorte à corriger la valeur mesurée pour le niveau selon la valeur de correction et/ou la formule de correction.

4. Transmetteur de niveau selon au moins l'une des revendications 1 à 3,
**caractérisé**
**en ce que** le transmetteur de niveau (9) est exécuté en tant qu'appareil de mesure à ultrasons, en tant qu'appareil de mesure radar filoguidé ou en tant qu'appareil de mesure radar à émission libre.

5. Système, comprenant au minimum un transmetteur de niveau (9) destiné à la détermination du niveau d'un produit de process (10) dans un réservoir (12) au moyen d'une méthode du temps de parcours, et au moins un dispositif (1) destiné à la détermination du coefficient diélectrique d'un deuxième produit (11), qui se trouve entre le produit de process (10) et le transmetteur de niveau (9),
le dispositif (1) comprenant un guide d'ondes (2) pour un signal de mesure de haute fréquence, et avec une unité électronique (8),
**caractérisé**
**en ce que** le guide d'ondes (2) est rempli au moins partiellement d'un diélectrique (21) et est conçu et peut être introduit dans le réservoir (12) de telle sorte que le diélectrique (21) forme avec le produit (11) une interface, au niveau de laquelle une part du signal de mesure - qui se propage en direction du produit (11) dans le guide d'ondes - est réfléchie
et
**en ce que** l'unité électronique (8) est conçue de telle sorte à recevoir le signal réfléchi au niveau de l'interface (23) et à l'interpréter en ce qui concerne l'amplitude.

6. Système selon la revendication 5,
**caractérisé**
**en ce que** l'unité électronique (8) compare l'amplitude du signal de mesure avec l'amplitude du signal réfléchi et détermine à partir du rapport des amplitudes le coefficient diélectrique du produit (11).

7. Système selon la revendication 5 ou 6,
**caractérisé**
**en ce que** le diélectrique (21) présente une terminaison (22) en forme de cône tronqué.

8. Système selon l'une ou plusieurs des revendications 5 à 7,
**caractérisé**
**en ce qu'**au moins une ailette de refroidissement (5) est prévue sur le dispositif (1).

9. Système selon l'une ou plusieurs des revendications 5 à 8,
**caractérisé**
**en ce que** le guide d'ondes (2) est conçu en tant que conducteur creux ou en tant que conducteur coaxial.
